# EUROPÄISCHE PATENTSCHRIFT

(11) **EP 0 596 366 B1**
(45) Veröffentlichungstag und Bekanntmachung des Hinweises auf die Patenterteilung: **23.04.1997**
(21) Anmeldenummer: 93117260.5
(22) Anmeldetag: 25.10.1993
(51) Int. Cl.: H01M 8/04

(54) **Verfahren und Einrichtung zur Wasser- und/oder Inertgasentsorgung eines Brennstoffzellenblocks**
Method and device for removing water and inert gases from a fuel-cell battery
Procédé et dispositif pour évacuation de l'eau et des gaz inertes dans une batterie de piles à combustible

(30) Priorität: 05.11.1992 DE 4237411
(43) Veröffentlichungstag der Anmeldung: 11.05.1994
(73) Patentinhaber: SIEMENS AKTIENGESELLSCHAFT, 80333 München (DE)
(72) Erfinder: Strasser, Karl, Dipl.-Ing., D-91058 Erlangen (DE)

(56) Entgegenhaltungen:
- EP-A- 0 442 042
- DE-A- 3 732 234
- DE-B- 1 187 697
- DE-B- 1 596 311
- FR-A- 1 576 348
- FR-A- 2 105 288
- US-A- 4 729 932
- US-A- 4 973 530
- PATENT ABSTRACTS OF JAPAN vol. 16, no. 324 (E-1234)15. Juli 1992 & JP-A-04 095 356 (FUJI ELECTRIC CO LTD) 27. März 1992

## Beschreibung

Die Erfindung bezieht sich auf ein Verfahren und eine Einrichtung zur kathoden- und/oder zur anodenseitigen Wasser- und Inertgasentsorgung aus einem Block mit einer Anzahl von Brennstoffzellen. Als Brennstoffzellentyp kommt hierbei eine PEM-Brennstoffzelle, wobei PEM die Abkürzung für Polymer-Elektrolyt-Membran oder "Proton-Exchange-Membran" ist, oder auch eine saure oder alkalische Brennstoffzelle in Frage.

Eine Brennstoffzelle besteht im allgemeinen aus einer elektrisch leitenden Stromübertragerplatte, einer Kathode, einer Ionen-leitenden Zwischenschicht, einer Anode und einer weiteren elektrisch leitenden Stromübertragerplatte, die in der genannten Reihenfolge als ebene Platten aufeinander gestapelt sind, wobei Anode, Elektrolyt und Kathode eine Membran-Elektrodeneinheit (ME) bilden.

Brennstoffzellen dieses Aufbaus sind u. a. durch das "Fuel Cell Handbook" von Appelby and Foulkes, New York, 1989, durch den Aufsatz von K. Strasser "Brennstoffzellen für Elektrotraktion", VDI-Berichte Nr. 912, 1992, Seiten 125 bis 145, sowie durch das deutsche Patent DE 27 29 640 bekannt. Weil die Brennstoffzelle chemisch gebundene Energie unmittelbar in elektrische Energie umsetzen kann, ermöglicht sie es, Brennstoff, wie z. B. Wasserstoff, Erdgas, Biogas, mit höherem Wirkungsgrad und mit geringerer Belastung für die Umwelt in elektrische Energie umzuwandeln, als es die bisher bekannten konventionellen Verbrennungskraftmaschinen, deren Wirkungsgrad durch den sogenannten Carnot'schen Prozeß begrenzt ist, zu tun vermögen.

Ein Block von Brennstoffzellen ist üblicherweise aus abwechselnd aufeinander gestapelten Membran-Elektrodeneinheiten, Gasräumen, Kühleinheiten und Druckkissen aufgebaut. Zwischen diesen einzelnen Komponenten sind Dichtungen und eventuell auch Abstandshalter eingebaut. Die einzelnen Flüssigkeits- und Gasräume des Blocks werden von axialen Kanälen aus durch radiale Kanäle, die durch die Dichtungen verlaufen, versorgt. Ein solcher axialer Kanal verläuft hierbei senkrecht zur Ebene der übereinander gestapelten plattenförmigen Komponenten des Brennstoffzellenblocks. Ein solcher radialer Kanal verläuft entsprechend in der Plattenebene.

Aus der Deutschen Auslegeschrift 1 596 311 ist ein Verfahren zum Betreiben einer Brennstoffzellen-Batterie bekannt, bei dem die Anreicherung von Inertgas durch Inertgas-Kaskadenspülung erfolgt. Die Entfernung des Inertgases erfolgt teilweise in Abhängigkeit vom elektrischen Strom der beiden letzten, parallel geschalteten Zellen. Die Wasserentfernung erfolgt dabei in zwei Zellenblöcken.

Desweiteren ist aus der Deutschen offenlegungsschrift DE 37 32 234 eine Brennstoffzellenanordnung und ein Verfahren zum Betreiben derselbigen mit Inertgas-Kaskadenspülung bekannt. Dabei sind die beiden letzten Zellen am Batterieende jeweils elektrisch parallel geschaltet und werden vom Reaktionsgas hintereinander durchströmt. Die inerten Gasanteile werden dabei in Abhängigkeit vom elektrischen Gesamtstrom und dem durch die beiden letzten Zellen fließenden elektrischen Strom über ein Spülventil geregelt entfernt.

Außerdem ist aus der Europäischen Patentanmeldung EP 0 442 042 eine Batterie von Wasserstoff/Sauerstoff-Brennstoffzellen bekannt, in der jede Gaselektrode eine Gaszuführung und eine Gasabführung besitzt, und deren Sauerstoffelektroden in Gruppen parallel versorgter und parallel entsorgter Elektroden angeordnet sind. Dabei wird das Gas einer Gruppe zugeführt, aus deren Auslässen stets eine Folgegruppe gespeist wird. In den Ent- und Versorgungsleitungen zwischen den Gruppen sind Wasserstoff/Sauerstoff-Rekombinationskatalysatoren angeordnet, in denen Wasserstoffbestandteile des Sauerstoffgases mit Sauerstoff katalytisch zu Wasser rekombiniert werden.

Ein weiterer Brennscoffzellenblock mit Kaskadenspülung von Kathodengas ist aus dem Französischen Patent FR 2 105 288 bekannt.

Beim Betrieb bekannter Brennstoffzellenblöcke, insbesondere bei aus PEM-Brennstoffzellen gebildeten Blöcken, besteht beispielsweise selbst bei einer anodenseitigen Versorgung mit technisch reinem Wasserstoff und bei einer kathodenseitigen Versorgung mit technisch reinem Sauerstoff das Problem, daß sich sowohl das infolge der elektrochemischen Reaktion von Wasserstoff und Sauerstoff in den Brennstoffzellen bildende Wasser als auch inerte Gase, wie z. B. Stickstoff, Kohlendioxid und Edelgase, bei im Kreislauf geführten Versorgungsgasen anreichern. Bisher angewandte Verfahren zur Entsorgung des Wasser- und Inertgasanteils oder des Inertgasanteils aus dem kathodenseitigen Gasgemisch bzw. dem anodenseitigen Gasgemisch basieren kathodenseitig auf einem überlagerten Sauerstoffkreislauf mit Verdichter, aus dem flüssiges Wasser kontinuierlich abgeschieden wird. Dabei reichert sich jedoch das Inertgas kontinuierlich an, wodurch die Zellspannung und damit der Wirkungsgrad absinken. Selbst eine Erhöhung der Spülrate bleibt ohne Einfluß auf die Anreicherung der inerten Gase; sie vermindert nur den Wasseranteil. Mit einer größer werdenden Spülrate vermindert zudem der erhöhte Leistungsbedarf des Verdichters den Systemwirkungsgrad deutlich. Die Spülrate ist dabei das Verhältnis des ausgetragenen zu dem eingetragenen Volumenstrom des anoden- oder kathodenseitigen Gasgemisches.

Mit einer Erhöhung der Spülrate nimmt außerdem der Leistungsbedarf des Verdichters für befeuchteten Sauerstoff zu und vermindert dadurch den Wirkungsgrad. Da zu verdichtende aggressive Medien, wie z. B. befeuchteter, heißer Sauerstoff, die Teile des Verdichters angreifen, steigt zudem der Wartungsaufwand mit zunehmender Leistung des Verdichters. Desweiteren besteht das Problem, daß bei einem Brennstoffzellenblock, der in einem Sicherheitscontainer integriert ist, die Verlustwärme des Verdichters abzuführen ist. Außerdem ist der relativ hohe Geräuschpegel des Verdichters abzudämmen.

Der Erfindung liegt daher die Aufgabe zugrunde, ein Verfahren und eine Einrichtung anzugeben, die es erlauben, einen Brennstoffzellenblock, insbesondere einen aus PEM-Brennstoffzellen bestehenden Block, bei zeitlich konstantem Wirkungsgrad durch geeignete Abfuhr der Inertgass und/oder des Produktwassers, bei nahezu 100 %iger Brennstoffausnutzung zu betreiben.

Die erstgenannte Aufgabe wird gemäß der Erfindung gelöst durch ein Verfahren zur kathoden- und/oder anodenseitigen Wasser- und Inertgasentsorgung aus einem Brennstoffzellenblock mit einer Anzahl von Brennstoffzellen, bei dem der Wasser- und Inertgasanteil in einem kathodenseitigen und/oder anodenseitigen Gasgemisch in Strömungsrichtung des jeweiligen Gasgemisches aufkonzentriert und zumindest teilweise aus dem Brennstoffzellenblock ausgetragen wird, wobei der Brennstoffzellenblock in mindestens zwei jeweils parallel durchströmte Zellgruppen unterteilt ist und die Aufkonzentration des Wasser- und Inertgasanteils im kathodenseitigen Gasgemisch und/oder im anodenseitigen Gasgemisch durch sukzessives Durchströmen der Zellgruppen durchgeführt wird, wobei dem kathodenseitigen Gasgemisch und/oder dem anodenseitigen Gasge misch vor dem Eintritt in die nächste Zellgruppe Wasser entzogen wird und daß die in Strömungsrichtung des Gasgemisches zuletzt angeordnete Zellgruppe verlassende Gasgemisch aus dem Brennstoffzellenblock ausgetragen wird.

Infolge der Aufkonzentration des Wasser- und Inertgasanteils bzw. des Inertgasanteils in Strömungsrichtung des jeweiligen Gasgemisches wird der dadurch bedingte Leistungsabfall auf die zuletzt in Strömungsrichtung der Gasgemische angeordneten Brennstoffzellen begrenzt.

Die zweitgenannte Aufgabe wird gemäß der Erfindung gelöst durch eine Einrichtung, bei der die Brennstoffzellen des Brennstoffzellenblocks in parallel durchströmbare Zellgruppen unterteilt sind und so mittels Leitungen miteinander verbunden sind, daß zumindest ein Teil der Gasgemische diese Zellgruppen sukzessive durchströmt und ein anderer vom elektrischen Strom abhängiger Teil der Gasgemische nach dem Durchströmen der in Strömungsrichtung des Gasgemisches zuletzt angeordneten Zellgruppe aus dem Brennstoffzellenblock austragbar ist, wobei die Zellgruppen so miteinander verbunden sind, daß das gesamte anoden- oder kathodenseitige Gasgemisch diese Zellgruppensukzessive durchströmt, wobei in einer Leitung für das kazhodenseitige Gasgemisch zwischen zwei aufeinanderfolgenden Zellgruppen ein Wasserseparator vorgesehen ist und daß die in Strömungsrichtung des Gasgemisches zuletzt angeordnete Zellgruppe verlassende Gasgemisch in Abhängigkeit vom elektrischen Strom aus dem Brennstoffzellenblock austragbar ist.

Infolge der in Zellgruppen eingeteilten Brennstoffzellen wird die parallele Durchströmung über alle Brennstoffzellen innerhalb einer Zellgruppe homogenisiert, was für eine gleichmäßige Weiterleitung auch des Wasser- und/oder Inertgasanteils vorteilhaft ist. Da zumindest ein Teil der Gasgemische diese Zellgruppen sukzessive durchströmt, wird der Wasser- und/oder Inertgasanteil in den Gasgemischen in Strömungsrichtung der Gasgemische aufkonzentriert. Nach Verlassen der im Strömungsweg zuletzt angeordneten Zellgruppe wird ein vom elektrischen Strom abhängiger Teil der Gasgemische aus dem Block ausgetragen und am Eingang des Brennstoffzellenblocks beispielsweise durch frisches Sauerstoff- bzw. Wasserstoffgas ersetzt. Durch eine Messung des elektrischen Stroms dieser Zellgruppe kann eine entsprechen große Menge Wasser und Inertgas bzw. Inert-gas aus dem Brennstoffzellenblock ausgetragen werden und durch frisches, technish reines Sauerstoff- bzw. Wasserstoffgas ersetzt werden, wodurch ein gleichbleibend hoher Gesamtwirkungsgrad des Brennstoffzellenblocks erreicht wird.

Zur Vergleichmäßigung der Leistung des Brennstoffzellenblocks ist es zweckmäßig, wenn der Brennstoffzellenblock von dem kathoden- und dem anodenseitigen Gasgemisch gegensinnig durchströmt wird. Hierdurch ist es möglich, dem während der Durchströmung des Brennstoffzellenblockes beispielsweise abnehmenden Sauerstoffgehalt des kathodenseitigen Gasgemisches oder dem abnehmenden Wasserstoffgehalt des anodenseitigen Gasgemisches eine hohe Konzentration von frischem Wasserstoff bzw. frischem Sauerstoff gegenüberzustellen.

Zur Aufkonzentration des Wasser- und Inertgasanteils oder des bloßen Inertgasanteils in dem kathoden- bzw. anodenseitigen Gasgemisch sieht eine weitere Ausgestaltung der Erfindung vor, daß die Anzahl der innerhalb einer Zellgruppe parallel durchströmten Brennstoffzellen in mungsrichtung des kathoden- bzw. anodenseitigen Gasgemisches abnimmt. Hierdurch bleibt außerdem ein möglicher Leistungsabfall im wesentlichen auf die zuletzt in der Strömungsrichtung gelegene Zellgruppe begrenzt, wobei diese Zellgruppe bedarfsweise nur eine einzige Brennstoffzelle aufweisen kann.

Eine besonders vorteilhafte Ausgestaltung der Erfindung erhält man, wenn die Zellgruppen so miteinander verbunden sind, daß das gesamte anoden- oder kathodenseitige Gasgemisch die Zellgruppen sukzessive durchströmt, wobei in einer Leitung für das kathodenseitige Gasgemisch zwischen zwei aufeinander folgenden Zellgruppen ein Wasserseparator vorgesehen sein kann, und wobei die in Strömungsrichtung des Gasgemisches zuletzt angeordnete Zellgruppe verlassende Gasgemisch in Abhängigkeit vom elektrischen Strom aus dem Brennstoffzellenblock austragbar ist.

Hierdurch ist erreicht, daß die zu einer Zellgruppe zusammengefaßten Brennstoffzellen parallel durchströmt werden, wobei der Wasser- und/oder Inertgasanteil von Zellgruppe zu Zellgruppe aufkonzentriert wird und in Abhängigkeit von dem über den Brennstoffzellenblock fließenden elektrischen Strom nach dem Verlassen der in Strömungsrichtung des Gasgemisches zuletzt angeordneten Zellgruppe ausgetragen werden kann. Außerdem erlaubt diese Anordnung der Zellgruppen und der die Zellgruppen verbindenden Leitungen einen Verdichter zur Rezirkulation von Teilen des kathodenseitigen Gasgemisches einzusparen, weil je Zellgruppe weniger Brennstoff bzw. Sauerstoff oder Inertgas transportiert werden muß als bei der nachfolgenden Ausgestaltung.

Diese alternative Ausgestaltung kann vorsehen, daß der Brennstoffzellenblock in mindestens zwei jeweils parallel durchströmte Zellgruppen unterteilt ist, und, daß das kathodenseitige Gasgemisch einerseits nach dem Durchströmen einer Zellgruppe teilweise unter Wasserabscheidung in dieselbe Zellgruppe rezirkuliert und andererseits teilweise in die darauffolgende Zellgruppe eingeleitet wird, wobei ein vom elektrischen Strom zumindest einer Brennstoffzelle abhängiger Teil des die in Strömungsrichtung des Gasgemisches zuletzt angeordnete Zellgruppe verlassenden Gasgemisches ausgetragen wird. Hierbei wird der die Zellgruppe nicht sukzessive durchströmende Teil der Gasgemische über einen Wasserseparator und einen Verdichter wieder in die Brennstoffzellen rezirkuliert. Hierdurch ist es möglich, fast alle Brennstoffzellen des Brennstoffzellenblocks in einer Zellgruppe zusammenzufassen. Die abschließende Aufkonzentration des Inertgasanteils wird auf wenige zuletzt in der Strömungsrichtung angeordnete Brennstoffzellen begrenzt. Dies beeinflußt eine Regelung des Ausstoßes von Inertgas positiv, da die Sensitivität einer beispielsweise stromabhängigen Regelung erhöht wird.

Eine vorteilhafte stromabhängige Regelung ergibt sich, wenn ein von einem elektrischen Strom Iₛ abhängiger Teil des anoden- und des kathodenseitigen Gasgemisches aus dem Brennstoffzellenblock ausgetragen wird, wobei Iₛ der über eine von zwei elektrisch parallel geschalteten Brennstoffzellen fließende Strom ist, wobei diese beiden Brennstoffzellen zuletzt in Strömungsrichtung wenigstens eines der beiden Gasgemische des Brennstoffzellenblocks angeordnet sind, und wobei der Brennstoff (z. B. H₂) und das Oxidanz (z. B. O₂) im zueinander stöchiometrischen Verhältnis zugeführt werden. Hierbei kann der Strom Iₛ noch auf den über den stoffzellenblock fließenden Strom I bezogen sein. Das Verhältnis von Iₛ/I ist dann ein einfacher Regelparameter, wobei dann ein zum Aufrechterhalten des Wirkungsgrades notwendiger Teil des kathoden- und anodenseitigen Gasgemisches kontinuierlich oder diskontinuierlich nach schreiten eines Sollwertes für Iₛ/I aus dem Brennstoffzellenblock ausgetragen wird.

Zur besonders guten Ausnutzung des Sauerstoff- oder Wasserstoffgehaltes in dem kathodenseitigen bzw. anodenseitigen Gasgemisch kann es zur Regelung der aus dem stoffzellenblock ausgetragenen Menge Gasgemisch vorgesehen sein, daß bei gegenläufiger Führung des anoden- und kathodenseitigen Gasgemisches anoden- oder kathodenseitiges Gasgemisch aus dem Block von n-Brennstoffzellen ausgetragen wird, wenn 2 I_{H}/I ≥ 0,70 bzw. 2 I_{O}/I ≥ 0,60 sind, wobei I der über den gesamten Block fließende Strom ist, I_{H} der über eine von zwei elektrisch parallel geschaltete Brennstoffzellen - die zusammen die zuletzt vom anodenseitigen Gasgemisch durchströmte Brennstoffzelle des Blocks bilden - fließende Strom ist und I₀ der über eine von zwei elektrisch parallel geschaltete Brennstoffzellen - die zusammen die zuletzt vom kathodenseitigen Gasgemisch durchströmte Brennstoffzelle des Blocks bilden - fließende Strom ist. Hiermit ist möglich, getrennt voneinander eine überschüssige oder zu knappe Versorgung der Brennstoffzellen mit dem Brenngas bzw. dem Oxidanz festzustellen. Dies ermöglicht es, meßtechnisch die Einhaltung des stöchiometrischen Verhältnisses zu überwachen.

Zur besonders gleichmäßigen Abfuhr des Wassers aus dem kathoden- und/oder anodenseitigen Gasgemisch werden hydrophile Einsätze, in den radialen Kanälen, die zur Entsorgung des anoden- oder kathodenseitigen Gasgemisches verwendet sind, vorgesehen. Hierdurch wird trotz eines Gemisches aus flüssigem Wasser und Gas als Strömungsmedium ein gut reproauzierbarer Drosselwiderstand und damit eine gleichmäßige Entsorgunc erreicht.

Zur Rezirkulierung des bei dem Entsorgungsprozeß separierten Wassers und damit zur Einsparung von Frischwasser kann es vorgesehen sein, das separierte Wasser einem Befeuchter zur Befeuchtung der in die Brennstoffzellen einströmenden Gasgemische zuzuführen.

Weitere vorteilhafte Ausgestaltungen der Erfindung sind den übrigen Unteransprüchen zu entnehmen.

Drei Ausführungsbeispiele der Erfindung werden anhand von vier Figuren näher erläutert. Dabei zeigen:
- Figur 1: ein Prinzipschaltbild der kathodenseitigen Wasserund Inertgasentsorgung und der anodenseitigen Inertgasentsorgung aus einem Brennstoffzellenblock nach einem ersten Entsorgungskonzept;
- Figur 2: ein Prinzipschaltbild der kathodenseitigen Wasser- und Inertgasentsorgung und der anodenseitigen Inertgasentsorgung aus einem Brennstoffzellenblock nach einem zweiten Entsorgungskonzept;
- Figur 3: ein Prinzipschaltbild der kathodenseitigen Wasser- und Inertgasentsorgung und der anodenseitigen Inertgasentsorgung aus einem Brennstoffzellenblock nach einem dritten Entsorgungskonzept und
- Figur 4: ein Prinzipschaltbild der elektrischen Verschaltung der Brennstoffzellen.

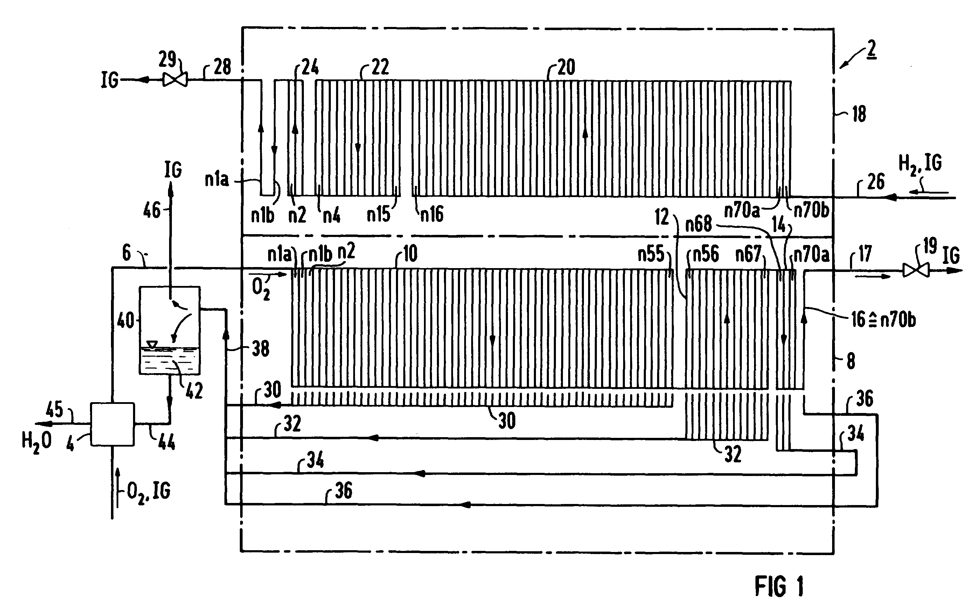

Gleiche Teile in den Figuren 1 bis 4 sind mit demselben Bezugszeichen versehen.

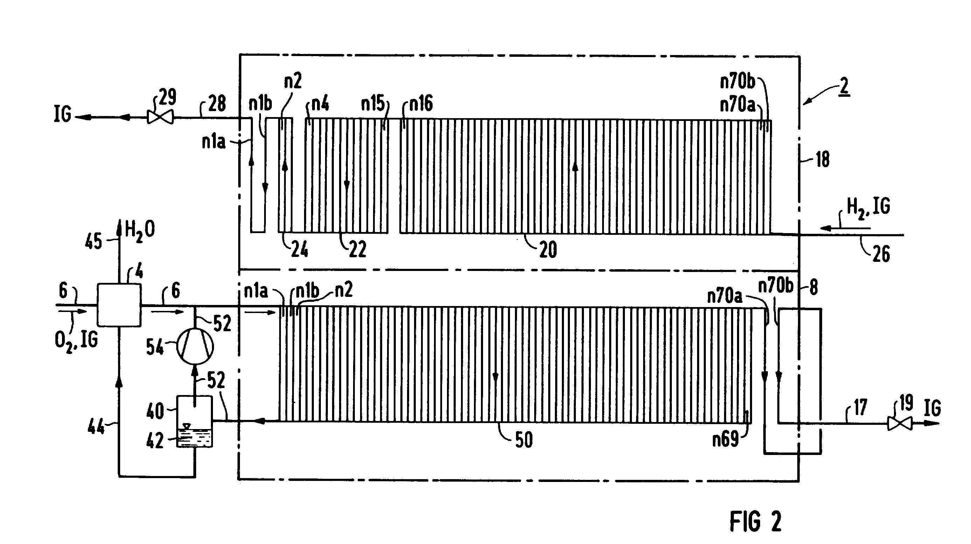

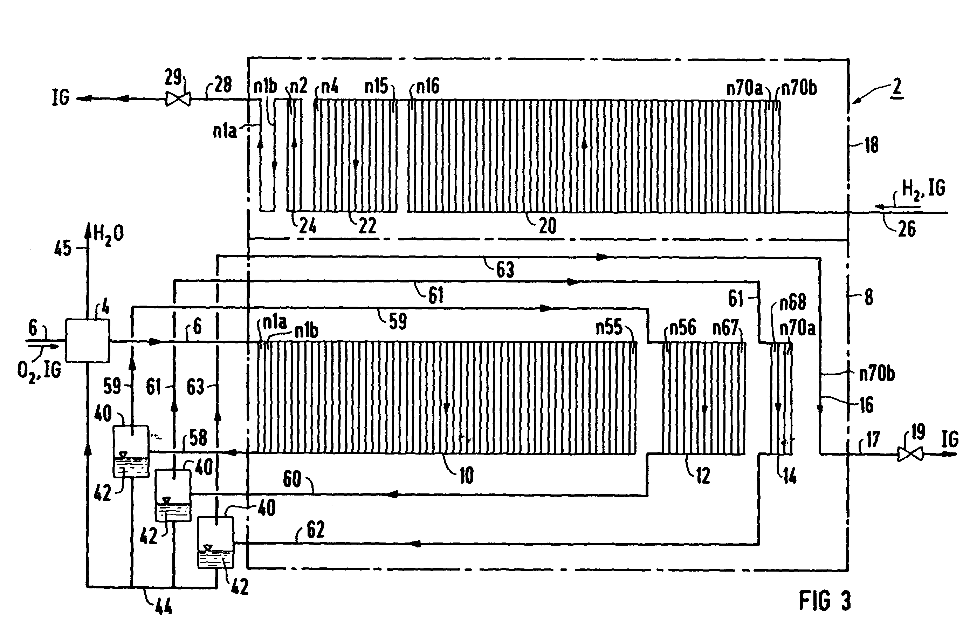

Die Figur 1 zeigt den prinzipiellen Aufbau der kathodenseitigen Wasser- und Inertgasentsorgung und der anodenseitigen Inertgasentsorgung aus einem Brennstoffzellenblock 2 nach dem ersten Entsorgungskonzept. Der Brennstoffzellenblock 2 ist aus zweiundsiebzig schematisch dargestellten Brennstoffzellen n1a, n1b, n2, n3, ..., n68, n69, n70a, n70b aufgebaut. Zur besseren Ubersicht sind in der Darstellung der Figur 1 ebenso wie auch in den Figuren 2 und 3 die kathodenseitigen Gasräume der Brennstoffzellen nla - n70b unter den anodenseitigen Gasräumen derselben Brennstoffzellen n1a - n70b dargestellt.

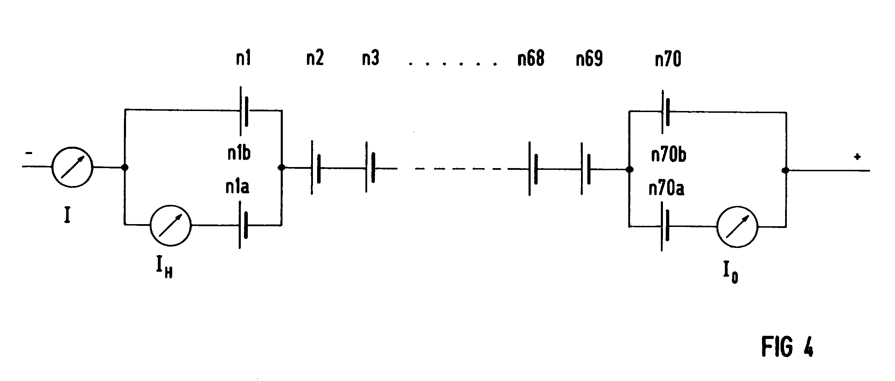

Die Kathodenseite 8 des Brennstoffzellenblocks 2 ist dabei in Strömungsrichtung des kathodenseitigen Gasgemisches O₂, IG zunächst in eine Zellgruppe 10 eingeteilt, in der die Brennstoffzellen n1a bis n55 parallel durchströmt werden, wobei die Brennstoffzellen n1a und n1b elektrisch parallel und die übrigen dazu elektrisch in Reihe geschaltet sind. Die sich daran anschließende Zellgruppe 12 verfügt über die parallel durchströmten und elektrisch in Reihe geschalteten Brennstoffzellen n56 bis n67. Daran schließen sich Zellgruppen 14, 16 an, wobei die Zellgruppe 14 über drei parallel durchströmte Brennstoffzellen n68 bis n70a und die Zellgruppe 16 nur über die Brennstoffzelle n70b verfügt. Elektrisch sind die Brennstoffzellen n68 und n69 der Zellgruppe 14 in Reihe geschaltet. Die Brennstoffzelle n70a ist mit der Brennstoffzellen n70b elektrisch parallel geschaltet. Diese elektrische Verschaltung der Brennstoffzellen n1a bis n70b ist der Figur 4 zu entnehmen.

Auf der Anodenseite 18 des Brennstoffzellenblocks 2 ist die elektrische Verschaltung der Brennstoffzellen n1a, n1b, n2, n3, ..., n69, n69, n70a, n70b natürlich identisch. Von einem anodenseitigen Gasgemisch H₂, IG parallel durchströmt werden hier in einer ersten Zellgruppe 20 die Brennstoffzellen n16 - n70b, in einer zweiten Zellgruppe 22 die Brennstoffzellen n4 - n15 und in einer dritten Zellgruppe 24 die Brennstoffzellen n2, n3. Die Zellgruppen 20, 22, 24 werden in dieser Reihenfolge sukzessive durchströmt. Sukzessive schließen sich daran die Brennstoffzellen n1b und n1a an.

Beim Betrieb des Brennstoffzellenblocks 2 strömt das kathodenseitige Gasgemisch, hier Sauerstoffgas O₂ mit einem Inertgasanteil IG,über einen Befeuchter 4 und eine stoffzuführungsleitung 6 in den Brennstoffzellenblock 2. Der Sauerstoffgehalt des über die Sauerstoffzuführungsleitung 6 kathodenseitig in den Brennstoffzellenblock 2 einströmenden Gasgemisches liegt bei etwa 99,5 vol.%.

Die übrigen 0,5 Vol.-% umfassen üblicherweise in technisch reinen Gasen erhaltene gasförmige Verunreinigungen, wie z. B. Stickstoff, Kohlendioxid und Edelgase. Diese Verunreinigungen verhalten sich gegenüber der elektrochemischen Reaktion in den Brennstoffzellen n1a bis n70b inert. Das kathodenseitige Gasgemisch strömt dann über die gasseitig in Serie geschalteten Zellgruppen 10 bis 16 und verläßt den Brennstoffzellenblock 2 über eine Restgasentsorgungsleitung 17 mit einem hier regelbaren Ventil 19. Das anodenseitige Gasgemisch, hier technisch reines Wasserstoffgas H₂ mit einem Verunreinigungsanteil von etwa 0 ,05 vol.%, nachfolgend Inertgasanteil IG genannt, wird über eine Wasserstoffzuführungsleitung 26 in die Zellgruppe 20 eingespeist, durchströmt die dazu gasseitig in Serie geschalteten Zellgruppen 22, 24 sowie die Brennstoffzellen n1a und n1b und verläßt die Anodenseite 18 über eine weitere Restgasentsorgungsleitung 28 mit einem ebenfalls hier regelbaren Ventil 29.

Auf der Kathodenseite 8 sind die einzelnen Brennstoffzellen n1a - n55 der Zellgruppe 10 an eine Wasserentsorgungsleitung 30 angeschlossen; die der Zellgruppe 12 an eine Wasserentsorgungsleitung 32; die der Zellgruppe 14 an eine entsorgungsleitung 34 und die Brennstoffzelle n70b an eine Wasserentsorgungsleitung 36, die in eine Sammelleitung 38 münden. Die Leitung 38 mündet ihrerseits in einen Wasserabscheider 40. Das in dem Wasserabscheider 40 separierte Wasser 42 wird über eine Leitung 44 in den Befeuchter 4 eingeleitet und dort zur Befeuchtung des in den Brennstoffzellenblock 2 einströmenden kathodenseitigen Gasgemisches, hier technisch reiner Sauerstoff O₂, verwendet. Das überschüssige Wasser tritt über eine Restwasserleitung 45 aus. Die mit dem Wasser 42 in den Wasserabscheider 40 eingetragenen gasförmigen Bestandteile, wie z. B. Stickstoff, Kohlendioxid und Edelgase, treten über eine Entlüftungsleitung 46 als Inertgas IG aus.

Nach Anschluß eines elektrischen Verbrauchers an den Brennstoffzellenblock 2 wird das auf der Kathodenseite 8 eingeleitete Gasgemisch, hier zu 99,5 vol.% Sauerstoff, an den Kathoden der Brennstoffzellen n1a - n70b in zweifach negativ geladene Sauerstoffionen O²⁻ umgewandelt. Die hierzu benötigten Elektronen werden in den Anoden der Brennstoffzellen n1a - n70b, in denen das in die Anodenseite 18 eingeleitete technisch reine Wasserstoffgas H₂ in Wasserstoffionen H⁺ umgewandelt wird, freigesetzt und fließen über den externen elektrischen Verbraucher zu den Kathoden der Brennstoffzellen in 1a - n70b, was hier jedoch nicht im einzelnen dargestellt ist. Die Wasserstoffionen wandern durch eine hier nicht dargestellte PEM an die Grenzschicht PEM-Kathode und rekombinieren dort unter Wasserbildung mit den Sauerstoffionen. Infolge dieser elektrochemischen Umsetzung nimmt in dem kathodenseitigen Gasgemisch der Sauerstoffgehalt bzw. im anodenseitigen Gasgemisch der Wasserstoffgehalt beim Durchströmen jeder Brennstoffzelle ab. Damit steigt auf der Anodenseite 18 die Konzentration des Inertgasanteil IG, wie z. B. Edelgase, und auf der Kathodenseite 8 der Inertgas- und Wasseranteil.

Durch die Anordnung der Brennstoffzellen n1a - n70b in sukzessive durchströmte Zellgruppen 10-16, 20-24 von jeweils parallel durchströmten Brennstoffzellen wird der Inertgasanteil im anodenseitigen Gasgemisch bzw. der Wasser- und Inertgasanteil im kathodenseitigen Gasgemisch von Zellgruppe zu Zellgruppe aufkonzentriert. Das Wasser wird hierbei auf der Kathodenseite 8 durch die Schwerkraft und unterstützt durch die Strömungsrichtung des Gasgemisches aus den Kathodenräumen der Brennstoffzellen n1a - n70b abtransportiert. Mittels der stromabhängig regelbaren Ventile 19, 29 wird jeweils eine zur Aufrechterhaltung des Gesamtwirkungsgrades des Brennstoffzellenblocks 2 hinreichend große Menge Inertgas abgegeben. Im Ausführungsbeispiel wird über das anodenseitige Ventil 29 der Wert 2 I_{H}/I ≥ 0,95 eingestellt. I ist dabei der gesamte über den Brennstoffzellenblock 2 fließende Strom, I_{H} ist der über eine der beiden elektrisch parallel geschalteten Brennstoffzellen n1a und n1b fließende Strom (vgl. Figur 4). Mit dem kathodenseitigen Ventil 19 wird der Wert 2 I_{O}/I ≥ 0,80 eingestellt. I_{O} ist dabei der über eine der beiden elektrisch parallel geschalteten Brennstoffzellen n70a und n70b fließende Strom (vgl. Figur 4).

In Figur 2 ist das zweite Entsorgungskonzept anhand eines Prinzipschaltbildes der Wasser- und Inertgasentsorgung des Brennstoffzellenblockes 2 dargestellt. Der gesamte Aufbau des Brennstoffzellenblocks 2 auf der Anodenseite 18 ist gegenüber der Figur 1 unverändert geblieben. Ebenso sind in dem Brennstoffzellenblock 2 wieder siebzig Brennstoffzellen n1 bis n70 elektrisch in Serie geschaltet, wobei die Brennstoffzellen n1a und n1b sowie n70a und n70b jeweils zueinander elektrisch parallel geschaltet sind.

Auf der Kathodenseite 8 sind die Brennstoffzellen n1a - n70b gegenüber der Figur 1 anders in Zellgruppen eingeteilt. Die Brennstoffzellen n1a - n69 sind dabei in einer Zellgruppe 50 zusammengefaßt, in der sie parallel durchströmt werden. Eingangsseitig parallel dazu schließt sich die Brennstoffzelle n70a und in Reihe zu letzterer die Brennstoffzelle n70b an. An die Zellgruppe 50 ist eine Rezirkulationleitung 52 angeschlossen. Über die Rezirkulationsleitung 52 wird das die Brennstoffzellen n1a - n69 verlassende kathodenseitige Gasgemisch über den Wasserababscheider 40 und einen Verdichter 54 in die Sauerstoffzuführungsleitung 6 rezirkuliert.

Beim Betrieb des Brennstoffzellenblockes 2 strömt das kathodenseitige Gasgemisch, hier Sauerstoff O₂mit einem Inertgasanteil IG, über die Sauerstoffzuführungsleitung 6 zunächst in den Befeuchter 4 und von dort weiter in die Zellgruppe 50 und die Brennstoffzelle n70a. Auf diese Weise ist gleichfalls gewährleistet, daß sich beim Betrieb des Brennstoffzellenblocks 2 der Inertgasanteil auf der Anodenseite 18 in den in Strömungsrichtung des anodenseitigen Gasgemisches zuletzt angeordneten Brennstoffzellen n1a und n1b aufkonzentriert und über die Restgasentsorgungsleitung 28 und das regelbare Ventil 29 ausgetragen wird. Durch die eingangsseitige Parallelschaltung der Brennstoffzelle n1a-n69 zur Brennstoffzelle n70a und die hierzu in Serie geschaltete Brennstoffzelle n70b sowie die teilweise Rezirkulation des kathodenseitigen Gasgemisches wird auch auf der Kathodenseite 8 erreicht, daß sich der Inertgasanteil IG in den in Strömungsrichtung des kathodenseitigen Gasgemisches zuletzt angeordneten Brennstoffzellen n70a und n70b aufkonzentriert. Von dort aus wird das Inertgas IG über die Restgasentsorgungsleitung 17 und das regelbare Ventil 19 ausgetragen.

Das bei der elektrochemischen Umsetzung des Sauerstoffs und des Wasserstoffs entstehende Produktwasser 42 wird in dem Wasserabscheider 40 von dem zu rezirkulierenden Gasgemisch getrennt und über die Leitung 44 in den Befeuchter 4 geleitet. Überschüssiges Wasser 42 kann vom Befeuchter 4 aus weiter über die Restwasserleitung 45 an die Umgebung abgegeben werden. Die Regelung der Ventile 19, 29 gleicht dabei der Beschreibung dieser Regelung beim Entsorgungskonzept 1 in Figur 1. Bei diesem Entsorgungskonzept kann die Spülrate beliebig gewählt werden. Dies ist jedoch eine Frage der Verdichterleistung. Die Spülrate ist dabei das Verhältnis des aus dem Block 2 ausgetragenen zu dem in den Block 2 eingetragenen Volumenstromes des kathoden- und/oder anodenseitigen Gasgemisches.

In der Figur 3 ist ein Prinzipschaltbild der Wasser- und Inertgasentsorgung des Brennstoffzellenblockes 2 gemäß dem dritten Entsorgungskonzept dargestellt. Der Aufbau des Brennstoffzellenblocks 2 auf der Anodenseite 18 gleicht demjenigen der Figuren 1 und 2. Ebenso ist die elektrische Verschaltung der Brennstoffzellen n1a - n70b unverändert geblieben. Auf der Kathodenseite 8 sind die Brennstoffzellen n1a - n70b wieder, wie schon in Figur 1 dargestellt, in die Zellgruppen 10, 12, 14, 16 unterteilt.

Auf der Anodenseite 18 reichert sich das Inertgas IG in dem kathodenseitigen Gasgemisch, wie schon zu Figur 1 und Figur 2 beschrieben, in den in Strömungsrichtung des Gasgemisches zuletzt angeordneten Brennstoffzellen n1a, n1b an und wird nach der bereits eingeführten Regelung des Ventils 29 über die Restgasentsorgungsleitung 28 ausgetragen.

Auf der Kathodenseite 8 strömt das kathodenseitige Gasgemisch, hier Sauerstoff O₂mit einem Inertgasanteil IG, über die Sauerstoffzuführungsleitung 6 zunächst in den Befeuchter 4 und von dort weiter über die Sauerstoffzuführungsleitung 6 in die erste Zellgruppe 10. Hier werden die Brennstoffzellen n1a bis n55 parallel durchströmt. Über eine Abzugsleitung 58 wird das aus der ersten Zellgruppe 10 auströmende kathodenseitige Gasgemisch, das nun schon einen Inertgas- und Wasseranteil aufweist, über den Wasserabscheider 40 und eine Zuführungsleitung 59 eingangsseitig in die zweite Zellgruppe 12 eingeleitet. Hier strömt das kathodenseitige Gasgemisch parallel durch die Brennstoffzellen n56 - n67. Infolge der elektrochemischen Umsetzung des Sauerstoffs im kathodenseitigen Gasgemisch beim Durchströmen der Brennstoffzellen n56 -n67 steigt der Inertgasanteil weiter. Das aus den Brennstoffzellen n56 -n67 austretende Gasgemisch wird über eine weitere Abzugsleitung 60 ebenfalls einem baugleichen Wasserabscheider 40 zugeführt und von dort weiter über eine weitere Zuführungsleitung 61 in die dritte Zellgruppe 14 eingeleitet. In der dritten Zellgruppe 14 werden die Brennstoffzellen n68 - n70a parallel durchströmt. Das kathodenseitige Gasgemisch wird dann nach neuerlicher Erhöhung der Konzentration des Inertgasanteils IG über eine weitere Abzugs leitung 62 einem weiteren baugleichen Wasserabscheider 40 zugeführt und von dort über eine weitere Rezirkulationsleitung 63 weiter in die zuletzt angeordnete Brennstoffzelle n70b eingeleitet. Das in den drei Wasserabscheidern 40 abgeschiedene Wasser 42 wird über Leitungen 44 in den Befeuchter 4 eingeleitet und dort zur Befeuchtung des kathodenseitigen Gasgemisches verwendet. Überschüssiges Wasser H₂O wird über die Restwasserleitung 45 an die Umgebung abgegeben.

Das in die zuletzt angeordnete Zellgruppe n70b einströmende kathodenseitige Gasgemisch wird über die Restgasentsorgungsleitung 17 und das regelbare Ventil 19 aus dem stoffzellenblock 2 ausgetragen. Die Regelung der Ventile 19, 29 ist dabei dieselbe wie sie schon bei der Beschreibung der Figuren 1 und 2 erläutert worden ist.

Gegenüber dem Entsorgungskonzept in Figur 2 kann in dem in Figur 3 dargestellten, dritten Entsorgungskonzept grundsätzlich auf einen separaten Verdichter 54 verzichtet werden, wenn die Spülrate hinreichend klein ist.

Grundsätzlich werden alle in den Figuren 1 bis 3 gezeigten Brennstoffzellen n1a - n70b über axiale und radiale Kanäle ver- und entsorgt. Ein axialer Kanal verläuft dabei senkrecht zur Plattenebene der Stapelanordnung von plattenförmigen Brennstoffzellen n1a - n70b. Ein radialer Kanal verläuft entsprechend in dieser Ebene. Zur Unterstützung der Wasserabscheidung aus dem kathodenseitigen Gasgemisch und zur Homogenisierung der Strömung durch die Zellgruppen 10 - 16 sind in den radialen Entsorgungskanälen der Brennstoffzellen für das kathodenseitige Gasgemisch hydrophile Einsätze vorgesehen. Unter hydrophilen Einsätzen werden dochtförmige Einsätze verstanden, die trotz eines Gemisches aus flüssigem Wasser und Gas als Strömungsmedium einen gut reproduzierbaren Drosselwiderstand haben und damit eine gleichmäßige Entsorgung ermöglichen.

Außerdem ist das auf der Kathodenseite 8 in Figur 3 erläuterte Entsorgungskonzept auch auf die Anodenseite 18 anwendbar, wenn dort flüssiges Wasser zu separieren ist. Dies ist beispielsweise der Fall, wenn der Brennstoffzellenblock nicht aus PEM-Brennstoffzellen, sondern aus alkalischen oder sauren Brennstoffzellen gebildet wird.

Die genaue Einteilung der Brennstoffzellen in Zellgruppen mit parallel durchströmten Brennstoffzellen hängt stark von der Zunahme inerter nicht umsetzbarer Gase IG, wie Wasserdampf, Stickstoff, Kohlendioxid und Edelgase, im zuströmenden Gasgemisch ab. Durch eine stärkere Unterteilung der Brennstoffzellen in in Serie geschalteten Zellgruppen wird in den ersten Zellgruppen ein geringerer Inertgasanteil IG mitgeschleppt als in einer Rezirkulation dieses Gasgemisches nach Wasserabscheidung in diese Zellgruppe. Bei den nachgeschalteten Zellgruppen ist dafür der Anteil der Reaktanten (O₂, H₂) bei gleichzeitig höherem Inertgasanteil IG geringer. Daher ist der Gasdurchsatz geringer, und es kann eher auf einen zusätzlichen Gasverdichter verzichtet werden.

## Patentansprüche

1. Verfahren zur kathoden- und/oder zur anodenseitigen Wasser- und Inertgasentsorgung aus einem Brennstoffzellenblock (2) mit einer Anzahl von Brennstoffzellen (n1a - n70b), bei dem der Wasser- und Inertgasanteil (IG) in einem kathodenseitigen (O₂) und/oder anodenseitigen Gasgemisch (H₂) in Strömungsrichtung des jeweiligen Gasgemisches aufkonzentriert und zumindest teilweise aus dem Brennstoffzellenblock (2) ausgetragen wird, wobei der Brennstoffzellenblock (2) in mindestens zwei jeweils parallel durchströmte Zellgruppen (10-16, 20-24) unterteilt ist und die Aufkonzentration des Wasser- und Inertgasanteils (IG) im kathodenseitigen Gasgemisch (O₂) und/oder im anodenseitigen Gasgemisch (H₂) durch sukzessives Durchströmen der Zellgruppen (10-16, 20-24) durchgeführt wird, wobei dem kathodenseitigen Gasgemisch (O₂) und/oder dem anodenseitigen Gasgemisch (H₂) vor dem Eintritt in die nächste Zellgruppe Wasser entzogen wird und das die in Strömungsrichtung des Gasgemisches (O₂) zuletzt angeordnete Zellgruppe (16) verlassende Gasgemisch (O₂) aus dem Brennstoffzellenblock (2) ausgetragen wird.

2. Verfahren nach Anspruch 1,
**dadurch gekennzeichnet**, daß zur geregelten Wasser- und/oder Inertgasentsorgung ein vom elektrischen Strom (I, I_{H}, I_{O}) zumindest einer Brennstoffzelle abhängiger Teil des jeweiligen Gasgemisches (O₂, H₂) aus dem Brennstoffzellenblock (2) ausgetragen wird.

3. Verfahren nach einem der Ansprüche 1 bis 2,
**dadurch gekennzeichnet**, daß der Brennstoffzellenblock (2) von dem anoden- und kathodenseitigen Gasgemisch (O_{2,} H₂) gegensinnig durchströmt wird.

4. Verfahren nach einem der Ansprüche 1 oder 2,
**dadurch gekennzeichnet**, daß die Wasserseparation in den Kathodenräumen und/oder Anodenräumen der Brennstoffzellen (n1a - n70b) durchgeführt wird.

5. Verfahren nach einem der Ansprüche 1 bis 4,
**dadurch gekennzeichnet**, daß das Wasser (42) mit der Gasströmung aus den Kathodenräumen und/oder Anodenräumen der Brennstoffzellen (n1a - n70b) ausgetragen und außerhalb der Brennstoffzellen (n1a - n70b) separiert wird.

6. Verfahren nach einem der Ansprüche 1 bis 5,
**dadurch gekennzeichnet**, daß das separierte Wasser (42) zur Befeuchtung der in die Brennstoffzellen (n1a - n70b) einströmenden Gasgemische (O₂, H₂) verwendet wird.

7. Verfahren nach einem der Ansprüche 1 bis 6,
**dadurch gekennzeichnet**, daß ein von einem elektrischen Strom Iₛ abhängiger Teil des anoden- und des kathodenseitigen Gasgemisches (H₂, O₂) aus dem Brennstoffzellenblock (2) ausgetragen wird, wobei Iₛ der über eine von zwei elektrisch parallel geschalteten Brennstoffzellen (n1a, n1b, n70a, n70b) fließende Strom ist, und wobei diese beiden Brennstoffzellen in Strömungsrichtung mindestens eines der beiden Gasgemische (O₂, H₂) an letzter Stelle des Brennstoffzellenblockes (2) angeordnet sind, und wobei Brennstoff (H2) und Oxidans (O₂) im zueinander stöchiometrischen Verhältnis zugeführt werden.

8. Verfahren nach einem der Ansprüche 1 bis 6,
**dadurch gekennzeichnet**, daß bei gegenläufiger Führung des anoden- und kathodenseitigen Gasgemisches (H₂, O₂) anoden- oder kathodenseitiges Gasgemisch aus dem Brennstoffzellenblock (2) von n-Brennstoffzellen (n1a - n70a) ausgetragen wird, wenn 2I_{H}/I ≥ 0,70 bzw.. 2I_{O}/I ≥ 0,60 sind, wobei I der über den gesamten Brennstoffzellenblock (2) fließende Strom ist, I_{H} der über eine von zwei elektrisch parallel geschalteten Brennstoffzellen (n1a, n1b) - die zusammen die zuletzt vom anodenseitigen Gasgemisch durchströmte Brennstoffzelle (n1) des Blocks bilden - fließende Strom ist und I_{O} der über eine von zwei elektrisch parallel geschalteten Brennstoffzellen (n70a, n70b) - die zusammen die zuletzt vom kathodenseitigen Gasgemisch durchströmte Brennstoffzelle (n70) des Blocks bilden - fließende Strom ist.

9. Einrichtung zur Durchführung des Verfahrens nach einem der Ansprüche 1 bis 8,
**dadurch gekennzeichnet**, daß die Brennstoffzellen (n1 - n70) des Brennstoffzellenblocks (2) in parallel durchströmbare Zellgruppen (10-16, 20-24) unterteilt sind und so mittels Leitungen (58, 60, 62) miteinander verbunden sind, daß zumindest ein Teil der Gasgemische (O₂, H₂) diese Zellgruppen (10-16) sukzessive durchströmt und ein anderer vom elektrischen Strom (I, I_{S}, I_{H}, I_{O}) abhängiger Teil der Gasgemische (O₂, H₂) nach dem Druchströmen der in Strömungsrichtung des Gasgemisches zuletzt angeordneten Zellgruppe (n1a, n1b, n70a, n70b) aus dem Brennstoffzellenblock (2) austragbar ist, wobei die Zellgruppen (10-16, 20-24) so miteinander verbunden sind, daß das gesamte anoden- oder kathodenseitige Gasgemisch (H₂, O₂) diese Zellgruppen (10-16, 20-24) sukzessive durchströmt, wobei in einer Leitung (58, 60, 62) für das kathodenseitige Gasgemisch zwischen zwei aufeinanderfolgenden Zellgruppen ein Wasserseparator (40) vorgesehen ist und das die in Strömungsrichtung des Gasgemisches zuletzt angeordnete Zellgruppe (16, n1a) verlassende Gasgemisch in Abhängigkeit vom elektrischen Strom aus dem Brennstoffzellenblock (2) austragbar ist.

10. Einrichtung nach Anspruch 9,
**dadurch gekennzeichnet**, daß die Anzahl der innerhalb einer Zellgruppe (10-16, n1a, n1b, 20-24, 50, n70a, n70b) parallel durchströmten Brennstoffzellen in Strömungsrichtung des anoden- bzw. kathodenseitigen Gasgemisches (H₂, O₂) abnimmt.

11. Einrichtung nach Anspruch 9 oder 10,
**dadurch gekennzeichnet**, daß jede an eine Zellgruppe (10-16) angeschlossene Wasserentsorgungsleitung (30-38) zur Wasserentsorgung in einen gemeinsamen Wasserseparator (40) mündet.

12. Einrichtung nach einem der Ansprüche 9 bis 11,
**dadurch gekennzeichnet**, daß in radiale, d.h. in Plattenebene verlaufende, Kanäle der Brennstoffzellen (n1a - n70b) hydrophile Einsätze als Drosselwiderstand eingebaut sind, wobei die radialen Kanäle zur Entsorgung des anoden- oder kathodenseitigen Gasgemisches (H₂, O₂) verwendet sind.

13. Einrichtung nach einem der Ansprüche 9 bis 12,
**dadurch gekennzeichnet**, daß das separierte Wasser (42) einem Befeuchter (4) zur Befeuchtung der in den Brennstoffzellenblock (2) einströmenden Gasgemische zuführbar ist.

## Claims

1. Method for the cathode-side and/or anode-side disposal of water and inert gas from a fuel cell block (2) having a number of fuel cells (n1a - n70b), where the water and inert gas component (IG) is increasingly concentrated in a cathode-side (O₂) and/or anode-side gas mixture (H₂) in the flow direction of the respective gas mixture and is discharged at least partially from the fuel cell block (2), with the fuel cell block (2) being divided into at least two cell groups (10-16, 20-24) through which there is a parallel flow in each case, and the concentration of the water and inert gas component (IG) in the cathode-side gas mixture (O₂) and/or in the anode-side gas mixture (H₂) being carried out through successive flow through the cell groups (10-16, 20-24), with water being removed from the cathode-side gas mixture (O₂) and/or the anode-side gas mixture (H₂) before entry into the next cell group, and the gas mixture (O₂) leaving the cell group (16) arranged last in the flow direction of the gas mixture (O₂) being discharged from the fuel cell block (2).

2. Method according to claim 1, characterized in that for the controlled disposal of water and/or inert gas a portion of the respective gas mixture (O₂, H₂) which is dependent on the electric current (I, I_{H}, I_{O}) of at least one fuel cell is discharged from the fuel cell block (2).

3. Method according to one of claims 1 to 2, characterized in that the anode-side and cathode-side gas mixtures (O₂, H₂) flow through the fuel cell block (2) in opposite directions.

4. Method according to one of claims 1 or 2, characterized in that the water separation is carried out in the cathode chambers and/or anode chambers of the fuel cells (n1a - n70b).

5. Method according to one of claims 1 to 4, characterized in that the water (42) is discharged from the cathode chambers and/or anode chambers of the fuel cells (n1a - n70b) with the gas flow and is separated outside the fuel cells (n1a - n70b).

6. Method according to one of claims 1 to 5, characterized in that the separated water (42) is used to humidify the gas mixtures (O_{2,} H₂) flowing into the fuel cells (n1a - n70b).

7. Method according to one of claims 1 to 6, characterized in that a portion of the anode-side and cathode-side gas mixture (H₂, O₂) dependent on an electric current I_{S} is discharged from the fuel cell block (2), with I_{S} being the current flowing through one of two fuel cells (n1a, n1b, n70a, n70b) connected electrically in parallel, and with these two fuel cells being arranged at the last point of the fuel cell block (2) in the flow direction of at least one of the two gas mixtures (O₂, H₂), and with fuel (H₂) and oxidant (O₂) being supplied in a stoichiometric ratio with respect to each other.

8. Method according to one of claims 1 to 6, characterized in that with a guiding of the anode-side and cathode-side gas mixture (H₂, O₂) in opposite directions, anode-side or cathode-side gas mixture is discharged from the fuel cell block (2) of n fuel cells (n1a - n70a) if 21_{H}/I ≥ 0.70 and 2I_{O}/I ≥ 0.60, with I being the current flowing through the entire fuel cell block (2), I_{H} being the current flowing through one of two fuel cells (n1a, n1b) connected electrically in parallel, which form together the fuel cell (n1) of the block through which the anode-side gas mixture flows last, and I_{O} being the current flowing through one of two fuel cells (n70a, n70b) connected electrically in parallel, which form together the fuel cell (n70) of the block through which the cathode-side gas mixture flows last.

9. Apparatus for carrying out the method according to one of claims 1 to 8, characterized in that the fuel cells (n1 - n70) of the fuel cell block (2) are divided into cell groups (10-16, 20-24) through which there can be a parallel flow, and are connected to each other by means of lines (58, 60, 62) in such a way that at least a portion of the gas mixtures (O₂, H₂) flows successively through these cell groups (10-16) and another portion of the gas mixtures (O₂, H₂) which is dependent on the electric current (I, I_{S}, I_{H}, I_{O}), after a flow through the cell group (n1a, n1b, n70a, n70b) arranged last in the flow direction of the gas mixture, can be discharged from the fuel cell block (2), with the cell groups (10-16, 20-24) being connected to each other in such a way that the entire anode-side or cathode-side gas mixture (H₂, O₂) flows successively through these cell groups (10-16, 20-24), with a water separator (40) being provided in a line (58, 60, 62) for the cathode-side gas mixture between two successive cell groups, and the gas mixture leaving the cell group (16, n1a) arranged last in the flow direction of the gas mixture can be discharged from the fuel cell block (2) in dependence upon the electric current.

10. Apparatus according to claim 9, characterized in that the number of fuel cells through which there is a parallel flow within a cell group (10-16, n1a, n1b, 20-24, 50, n70a, n70b) decreases in the flow direction of the anode-side and cathode-side gas mixture (H₂, O₂).

11. Apparatus according to claim 9 or 10, characterized in that each water disposal line (30-38) connected to a cell group (10-16) opens into a common water separator (40) for the disposal of water.

12. Apparatus according to one of claims 9 to 11, characterized in that in radial channels of the fuel cells (n1a - n70b), i.e. extending in the plane of the plates, hydrophilic inserts are installed as throttle resistance, with the radial channels being used for the disposal of the waste of the anode-side or cathode-side gas mixture (H₂, O₂).

13. Apparatus according to one of claims 9 to 12, characterized in that the separated water (42) can be supplied to a humidifier (4) to humidify the gas mixtures flowing into the fuel cell block (2).

## Revendications

1. Procédé pour éliminer l'eau et les gaz inertes, côté cathode et/ou côté anode, d'une batterie de piles à combustible (2), comportant un certain nombre de piles à combustible (n1a à n70b), dans lequel la fraction eau et gaz inerte (IG) d'un mélange gazeux côté cathode (O₂) et/ou côté anode (H₂) est concentrée dans la direction d'écoulement du mélange gazeux, et est au moins partiellement évacuée de la batterie de piles à combustible (2), la batterie de piles à combustible (2) étant subdivisée en au moins deux groupes de piles (10 à 16, 20 à 24) , dans lesquelles on passe en parallèle, et la concentration de la fraction eau et gaz inerte (IG) du mélange gazeux côté cathode (O₂) et/ou du mélange gazeux côté anode (H₂) est réalisée par passages successifs dans les groupes de piles (10 à 16, 20 à 24), de l'eau étant soutirée du mélange gazeux côté cathode (O₂) et/ou du mélange gazeux côté anode (H₂) avant pénétration dans le groupe de piles suivant, et le mélange gazeux (O₂), sortant du groupe de piles (16) disposé en dernier dans la direction d'écoulement du mélange gazeux (O₂), étant évacué de la batterie de piles à combustible (2).

2. Procédé selon la revendication 1, caractérisé en ce que, pour assurer une régulation de l'élimination de l'eau et/ou du gaz inerte, une partie du mélange gazeux correspondant (O₂, H₂), partie qui dépend du courant électrique (I, I_{H}, I_{O}) d'au moins une pile à combustible, est évacuée de la batterie de piles à combustible (2) .

3. Procédé selon l'une des revendications 1 à 2, caractérisé en ce que les mélanges gazeux (O₂, H₂) côté anode et côté cathode passent en sens contraire dans la batterie de piles à combustible (2).

4. Procédé selon l'une des revendications 1 ou 2, caractérisé en ce que la séparation de l'eau a lieu dans les compartiments cathodiques et/ou dans les compartiments anodiques des piles à combustible (n1a à n70b).

5. Procédé selon l'une des revendications 1 à 4, caractérisé en ce que l'eau (42) est évacuée, avec l'écoulement gazeux, des compartiments cathodiques et/ou des compartiments anodiques des piles à combustible (n1a à n70b) et est séparée à l'extérieur des piles à combustible (n1a à n70b)).

6. Procédé selon l'une des revendications 1 à 5, caractérisé en ce que l'eau séparée (42) est utilisée pour humidifier les mélanges gazeux (O₂, H₂) pénétrant dans les piles à combustible (n1a à n70b).

7. Procédé selon l'une des revendications 1 à 6, caractérisé en ce qu'on évacue de la batterie de piles à combustible (2) une partie, dépendant d'un courant électrique I_{S}, du mélange gazeux (H₂, O₂) côté anode et côté cathode, où I_{S} est le courant électrique qui passe dans l'une de deux piles à combustible (n1a, n1b, n70a, n70b), montées électriquement en parallèle, ces deux piles à combustible étant disposées sur la dernière position de la batterie de piles à combustible (2), dans la direction d'écoulement d'au moins l'un des deux mélanges gazeux (O₂, H₂), du combustible (H₂) et un oxydant (O₂) étant amenés selon un rapport stoechiométrique l'un par rapport à l'autre.

8. Procédé selon l'une des revendications 1 à 6, caractérisé en ce que, quand les mélanges gazeux (H₂, O₂) côté anode et côté cathode passent en sens contraire, on évacue un mélange gazeux, côté anode ou côté cathode, de la batterie de piles à combustible (2) constituée de n piles à combustible (n1a à n70a), respectivement quand 2I_{H}/I ≥ 0,70 et 2I_{O}/I ≥ 0,60, où I est le courant électrique qui passe dans la totalité de la batterie de piles à combustible (2), I_{H} est le courant qui passe dans l'une de deux piles à combustible (n1a à n1b) montées électriquement en parallèle - qui ensemble forment la pile à combustible (n1) de la batterie, pile dans laquelle passe en dernier le mélange gazeux côté anode - et I_{O} est le courant électrique qui passe dans l'une de deux piles à combustible (n70a, n70b), montées électriquement en parallèle - qui ensemble forment la pile à combustible (n70) de la batterie, pile dans laquelle passe en dernier le mélange gazeux côté cathode.

9. Dispositif pour mettre en oeuvre le procédé selon l'une des revendications 1 à 8, caractérisé en ce que les piles à combustible (n1 à n70) de la batterie de piles à combustible (2) sont subdivisées en des groupes de piles (10 à 16, 20 à 24), pouvant être parcourus en parallèle, et sont ainsi reliées les unes aux autres par des conduites (58, 60, 62) ; qu'au moins une partie des mélanges gazeux (O₂, H₂) passe successivement dans ces groupes de piles (10 à 16), et une autre partie des mélanges gazeux (O₂, H₂), qui dépend du courant électrique (I, I_{S}, I_{H}, I_{O}), peut être évacuée de la batterie de piles à combustible (2) après avoir passé dans les groupes de piles (n1a, n1b, n70a, n70b), disposés en dernier dans la direction de l'écoulement du mélange gazeux, les groupes de piles (10 à 16, 20 à 24) étant reliés les uns aux autres de telle sorte que la totalité du mélange gazeux (H₂, O₂), côté anode ou côté cathode, passe successivement dans ces groupes de piles (10 à 16, 20 à 24), un séparateur d'eau (40) étant prévu dans une conduite (58, 60, 62) pour le mélange gazeux côté cathode, entre deux groupes de piles successifs, et le mélange gazeux quittant le groupe de piles (16, n1a) disposé en dernier dans la direction de l'écoulement du mélange gazeux, pouvant être évacué du bloc de piles à combustible (2) en fonction du courant électrique.

10. Dispositif selon la revendication 9, caractérisé en ce que le nombre des piles à combustible parcourues en parallèle à l'intérieur d'un groupe de piles (10 à 16, n1a, n1b, 20 à 24, 50, n70a, n70b) diminue dans la direction de l'écoulement du mélange gazeux (O₂, H₂), respectivement côté anode et cathode.

11. Dispositif selon la revendication 9 ou 10, caractérisé en ce que chaque conduite (30 à 38) destinée à l'évacuation de l'eau et raccordée à un groupe de piles (10 à 16), débouche pour l'élimination de l'eau dans un séparateur d'eau commun (40).

12. Dispositif selon l'une des revendications 9 à 11, caractérisé en ce que des inserts hydrophiles, sous forme de bobines à inductance, sont incorporés dans des canaux radiaux, c'est-à-dire courant dans le plan des plaques, des piles à combustible (n1a à n70b), les canaux radiaux étant utilisés pour éliminer le mélange gazeux (H₂, O₂) côté anode ou côté cathode.

13. Dispositif selon l'une des revendications 9 à 12, caractérisé en ce que l'eau séparée (42) peut être envoyée à un humidificateur (4), pour humidifier les mélanges gazeux pénétrant dans le bloc de piles à combustible (2).
